(19) **Europäisches Patentamt**

**European Patent Office**

**Office européen des brevets**

(11) **EP 1 028 038 B1**

(12) **EUROPÄISCHE PATENTSCHRIFT**

(45) Veröffentlichungstag und Bekanntmachung des Hinweises auf die Patenterteilung:
**26.05.2004 Patentblatt 2004/22**

(51) Int Cl.⁷: **B60R 21/32**, B60R 21/01

(21) Anmeldenummer: **00101689.8**

(22) Anmeldetag: **03.02.2000**

(54) **Verfahren zur Auslösung einer Sicherheitseinrichtung in einem Kraftfahrzeug im Falle eines Überschlages**

Method for activating a safety system in a vehicle in case of roll-over

Méthode de déclenchement d' un système de sécurité d' un véhicule en cas de retournement

(84) Benannte Vertragsstaaten:
**DE ES FR GB IT SE**

(30) Priorität: **09.02.1999 DE 19905379**

(43) Veröffentlichungstag der Anmeldung:
**16.08.2000 Patentblatt 2000/33**

(73) Patentinhaber: **Conti Temic Microelectronic GmbH**
**90411 Nürnberg (DE)**

(72) Erfinder:
• **Küblbeck, Hermann**
**86529 Schrobenhausen (DE)**
• **Larice, Markus**
**85123 Karlskron (DE)**
• **Steurer, Helmut**
**85302 Junkenhofen (DE)**

(56) Entgegenhaltungen:
**WO-A-98/29280**

## Beschreibung

Die Erfindung betrifft ein verfahren zur Auslösung wenigstens einer Sicherheitseinrichtung in einem Kraftfahrzeug im Falle eines Überschlages. Dabei kommen als Sicherheitseinrichtungen vornehmlich Überschlagbügel, Airbags und Gurtstraffer in Frage.

Aus der EP 0 430 813 B1 ist ein Sicherheitssystem für Kraftfahrzeuge mit einer elektronischen Anordnung zur Steuerung wenigstens einer Sicherheitseinrichtung im Falle eines Überschlags des Kraftfahrzeugs bekannt. Das Sicherheitssystem enthält ein Gyrometer (Drehraten- oder Gyrosensor), das die Drehgeschwindigkeit der wankbewegung mißt, und Beschleunigungsmesser in allen drei Raumachsen, wobei die elektronische Anordnung die vom Gyrometer und von den Beschleunigungssensoren stammenden Signale zur Steuerung der Auslösung der Sicherheitseinrichtung verarbeitet. Hierbei erfolgt die Auswertung der Sensorsignale des Gyrosensors mittels Integration der Drehgeschwindigkeit für eine bestimmte Zeitdauer, falls ein Initialereignis erkannt wird. Ein solches Initialereignis liegt dann vor, wenn die horizontale Beschleunigung eine bestimmte Schwelle oder das Verhältnis von Horizontal- zu Querbeschleunigung eine bestimmte Schwelle überschreitet. Damit wird ein Überlaufen der Integration vermieden, insbesondere der Neigungswinkel des Fahrzeuges bestimmt.

Eine Auslösung bei diesem bekannten Sicherheitssystems erfolgt auch ausschließlich aufgrund der sensorsignale des Gyrosensors, wenn diese werte einen hohen Schwellwert überschreiten, also eine hohe Winkelgeschwindigkeit vorliegt. Jedoch können im praktischen Fahrbetrieb auch hohen Winkelgeschwindigkeiten auftreten, die wohl zu einer gewissen Neigung des Fahrzeuges führen, jedoch keinen Überschlag zur Folge haben. Bei dem bekannten Sicherheitssystem ist daher eine Fehlauslösung bei hohen Winkelgeschwindigkeiten nicht ausgeschlossen.

Des weiterer ist aus der WO 98 29280 ein Verfahren zur Auslösung einer Sicherheitseinrichtung bekannt, wobei die Drehgeschwindigkeit eines Fahrzeugs von einem Drehratensensor abgetastet wird, und der durch Differenzieren erhaltene Wert der Drehgeschwindigkeit mit einem Schwellwert verglichen wird.

Es ist deshalb Aufgabe der Erfindung, ein Verfahren zur Auslösung wenigstens einer Sicherheitseinrichtung in einem Kraftfahrzeug im Falle eines Überschlages anzugeben, bei dem bei hohen Winkelgeschwindigkeiten einer Wankbewegung des Kraftfahrzeuges die Wahrscheinlichkeit einer Fehlauslösung minimiert wird.

Diese Aufgabe wird durch ein Verfahren gemäß den Merkmalen des Anspruchs 1 gelöst, bei dem das von einem die Drehgeschwindigkeit der Wankbewegung sensierenden Drehratensensor abgegebene Sensorsignal zur Erzeugung von Drehratendaten ($\omega_i$) in aufeinanderfolgenden, vorzugsweise äqidistanten Datenerfassungszeitpunkten $t_i$ abgetastet wird (Verfahrensschritt a), mit wenigstens drei aufeinanderfolgenden Datenerfassungszeitpunkten wenigstens zwei disjunkte Zeitintervalle erzeugt werden (Verfahrensschritt b), aus den zu den drei aufeinanderfolgenden Datenerfassungszeitpunkten gehörenden Drehratenwerte die Differenzenquotienten $\Delta\omega_j$ gebildet werden (Verfahrensschritt c), die Differenzenquotienten $\Delta\omega_j$ zur Bildung eines einem der genannten Drehratenwerte zuzuordnenden Differentialwertes $\omega_k'$ aufsummiert werden (Verfahrensschritt d), in Abhängigkeit dieses Drehratenwertes mittels wenigstens einer Bewertungsfunktion der zugeordnete Differentialwert $\omega_i'$ bewertet wird (Verfahrensschritt e), und in Abhängigkeit der Bewertung die Sicherheitseinrichtung ausgelöst wird (Verfahrensschritt f).

Die Erfindung zeigt auf überraschend und einfache Weise, daß der Nachteil bei ausschließlicher Verwendung der Winkelgeschwindigkeit als Auslösekriterium bei hohen Winkelgeschwindigkeiten ausbleibt, wenn statt dessen eine Größe Einsatz findet, die durch eine Art Differentiation der Winkelgeschwindigkeit gewonnen wird. Damit wird als Kriterium zur Auslösung bei hohen Winkelgeschwindigkeiten eine der Winkelbeschleunigung der wankbewegung des Kraftfahrzeuges entsprechende Größe verwendet.

Besonders vorteilhaft ist es, wenn in einem aktuellen Datenerfassungszeitpunkt $t_l$ die Verfahrensschritte b) bis f) durchgeführt werden, wobei dem erfaßten Wert $\omega_l$ der Drehrate der gemäß Verfahrensschritt d) berechnete Differentialwert $\omega_k'$ zugeordnet wird (Verfahrensschritt g), und in darauffolgenden Datenerfassungszeitpunkten $t_{l+1}$, $t_{l+2}$, $t_{l+3}$, .... sukzessive Verfahrensschritt g) wiederholt wird. Somit wird mit jedem neuen Datenerfassungszeitpunkt ein neues Zeitintervall berechnet, das zusammen mit den zwei vorangehenden Zeitintervallen zur Berechnung des Differentials dienen, wobei lediglich der zu dem neu gebildeten Zeitintervall gehörende Differenzenquotient gebildet werden muß, um anschließend mit den schon vorliegenden Differenzenquotienten der vorangehenden Zeitintervalle aufsummiert zu werden. Damit wird in der gleichen Taktrate, die auch für die Digitalisierung verwendet wird, der Differentialwert erzeugt.

Vorzugsweise wird die Bewertung derart ausgeführt, daß in Abhängigkeit eines Drehratenwertes $\omega_i$ der Wert der Bewertungsfunktion $f_1(\omega_i)$ berechnet und mit dem zugehörigen Differentialwert $\omega_i'$ verglichen wird. Falls der Wert der Bewertungsfunktion $f_1(\omega_i)$ von dem Differentialwert $\omega_i'$ überschritten wird, erfolgt die Auslösung der Sicherheitseinrichtung.

Bei einem vorteilhaften Ausführungsbeispiel wird als Bewertungsfunktion $f_1(\omega_i)$ eine Treppenfunktion, vorzugsweise monoton fallend mit einer begrenzten Anzahl von Stufen verwendet. Damit wird die Winkelgeschwindigkeit $\omega$ mit dem über dem zugehörigen Zeitintervall berechneten Differentialwert $\omega'$ verknüpft.

Gemäß einem besonders bevorzugten Ausführungsbeispiel kann eine weiteres Auslösekriterium in Form einer weiteren Bewertungsfunktion sign($\omega_l$, $\omega_l'$) angewendet werden, indem das Vorzeichen der Werte der Drehratendaten $\omega_i$ aus dem Zeitintervall und das Vorzeichen des zugehörigen Differentials $\omega_k'$ verglichen werden, und eine Auslösung der Sicherheitseinrichtung verhindert wird, wenn die Vorzeichen unterschiedlich sind. Damit wird bei einem Überschlag die Auslösung solange verzögert, bis $\omega_i$ und $\omega_i'$ gleiche Vorzeichen aufweisen. Es hat sich nämlich herausgestellt, daß unter allen Startbedingungen erfolgenden Überschläge spätestens nach einer gewissen Zeitdauer zu gleichen Vorzeichen der genannten Größen führen.

weiterhin können bei einem vorteilhaften Ausführungsbeispiel das Auslöseverhalten hinsichtlich langsamer Überrollvorgänge verbessert werden, indem zur Auswertung des Vorliegens einer zu einem Überschlag führenden unkontrollierten Drehbewegung neben der einen der Differentiation der Winkelgeschwindigkeit ähnlichen Größe auch eine auf einer Integration der Winkelgeschwindigkeit beruhenden Größe verwendet wird. Zur Auswertung wird wiederum eine Bewertungsfunktion $f_2(\omega_l)$ berechnet, deren Wert mit dem Wert des Integrals $\int \varphi dt_l$ verglichen wird. Eine Auslösung erfolgt erst dann, wenn der Wert der Bewertungsfunktion $f_2(\omega_i)$ von dem wert des Integrals $\int \varphi dt_l$ überschritten wird.

Da die Integration über der Winkelgeschwindigkeit zu einer dem Neigungswinkel näherungsweise entsprechenden Größe führt, jedoch die Integration fortlaufend erfolgt, wird vorgeschlagen, eine Rückführung des Integrals $\int \varphi dti$ mittels einer Rückführfunktion R($\int \varphi dt_l$) durchzuführen, wobei vorzugsweise die Rückführung in Abhängigkeit der zeitlichen Konstanz des Wertes des Integrals ($\int \varphi dt_l$) erfolgt. Insbesondere ist es günstig, das Integral ($\int \varphi dt_l$) stufenweise zurückzuführen, da dies einfach, d. h. mit geringem Rechneraufwand durchführbar ist. Bei einem besonders bevorzugten Ausführungsbeispiel kann dies derart erfolgen, daß in Zeitabschnitten $\Delta t$ um x % zurückgeführt wird, wobei $\Delta t$ in dem Bereich 1 bis 200 ms und x in dem Bereich 10 bis 20 liegt. Das rückgeführte Integral $\int \varphi dt_i$ entspricht damit näherungsweise dem Neigungswinkels $\alpha$ des Kraftfahrzeuges.

Die zur Auswertung des Integrals $\int \varphi dt_i$ verwendete Bewertungsfunktion $f_2(\omega_i)$ kann als Treppenfunktion, insbesondere als monoton fallende Treppenfunktion mit einer begrenzten Anzahl von Stufen ausgebildet sein.

Schließlich kann auch zur Auswertung des Integrals $\int \varphi dt_l$ neben der ersten verwendeten Bewertungsfunktion $f_2(\omega_i)$ auch eine zweite Bewertungsfunktion sign($\omega_i$, $\alpha$) verwendet werden, indem das Vorzeichen der Werte der Drehratendaten $\omega_i$ und das Vorzeichen des Integrals $\int \varphi dt_l$ bzw. des Neigungswinkels $\alpha$ verglichen werden, und eine Auslösung der Sicherheitseinrichtung verhindert wird, wenn die Vorzeichen unterschiedlich sind.

Damit kann in vorteilhafter Weise eine Auslösung der Sicherheitseinrichtung über zwei Kanäle realisiert werden, nämlich einerseits durch Auswertung einer durch die oben beschriebene Differentiation der winkelgeschwindigkeit erhaltenen Größe und andererseits durch Auswertung der durch Integration über die Winkelgeschwindigkeit gewonnen Größe.

Bei einer besonders bevorzugten Ausführungsform der Erfindung werden zusätzlich zur Drehrate ein fahrzeugspezifischer Parameter, nämlich die Vertikalbeschleunigung erfaßt und ausgewertet, indem die Werte der in den Datenerfassungszeitpunkten erfaßten Beschleunigungsdaten mit einer Stabilitätsschwelle verglichen wird. Damit kann in Abhängigkeit der detektierten Vertikalbeschleunigung, die die dynamische Fahrlage des Fahrzeuges darstellt, eine noch bessere Differenzierung nach Fire-szenarien, d. h. Fahrzeugzustände, die zur Auslösung der Sicherheitseinrichtung führen soll, und No-fire-szenarien erzielt werden. Insbesondere kann Wert der Stabilitätsschwelle an die der Auswertung zugrundeliegenden Größe angepaßt werden, also ob die durch Differentiation der Winkelgeschwindigkeit oder durch Integration erhaltene Größe verwendet wird. Bei der zweikanaligen Ausführung wird an jeden Kanal eine spezifische Anpassung vorgenommen.

Ausführungsbeispiele zur Durchführung des erfindungsgemäßen Verfahrens sind nachstehend ausführlich erläutert und anhand der Figuren dargestellt.

Es zeigen:

Fig. 1: Ein Blockschaltbild eines Ausführungsbeispieles mit einem Drehratensensor und einem Beschleunigungssensor in z-Richtung,

Fig. 2a: ein die Bewertungsfunktion $f_1(\omega_i)$ für Kanal 1 darstellendes $\omega$-$\omega'$-Diagramm,

Fig. 2b: eine Tabelle mit den $\omega$-$\omega'$- Schwellwertkombinationen der Bewertungsfunktion $f_1(\omega_i)$ für Kanal 1,

Fig. 3: eine Tabelle mit den Schwellwerten für die Beschelunigungswerte zur Prüfung der dynamischen Stabilität für Kanal 1,

Fig. 4: eine detaillierte Teildarstellung des Blockschaltbildes nach Figur 1,

Fig. 5: eine weitere detaillierte Teildarstellung des Blockschaltbildes nach Figur 1,

Fig. 6a: eine Tabelle mit den $\omega$-$\alpha$- Schwellwertkombinationen der Bewertungsfunktion $f_2(\omega_i)$ für Kanal 2,

Fig. 6b: ein die Bewertungsfunktion $f_2(\omega_i)$ für Kanal 2 darstellendes $\omega$-$\alpha$-Diagramm, und

Fig. 7: eine Tabelle mit den Schwellwerten für die Beschleunigungswerte zur Prüfung der dynamischen Stabilität für Kanal 2,

In den Figuren sind gleiche Funktionsblöcke bzw. gleichwirkende Teile mit den gleichen Bezugszeichen versehen.

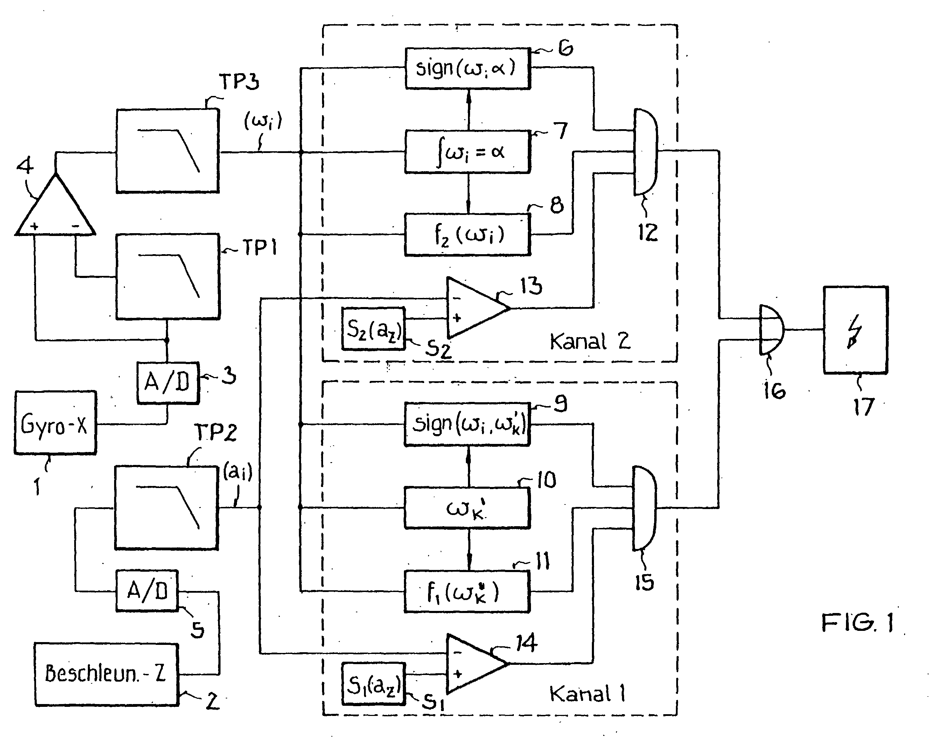

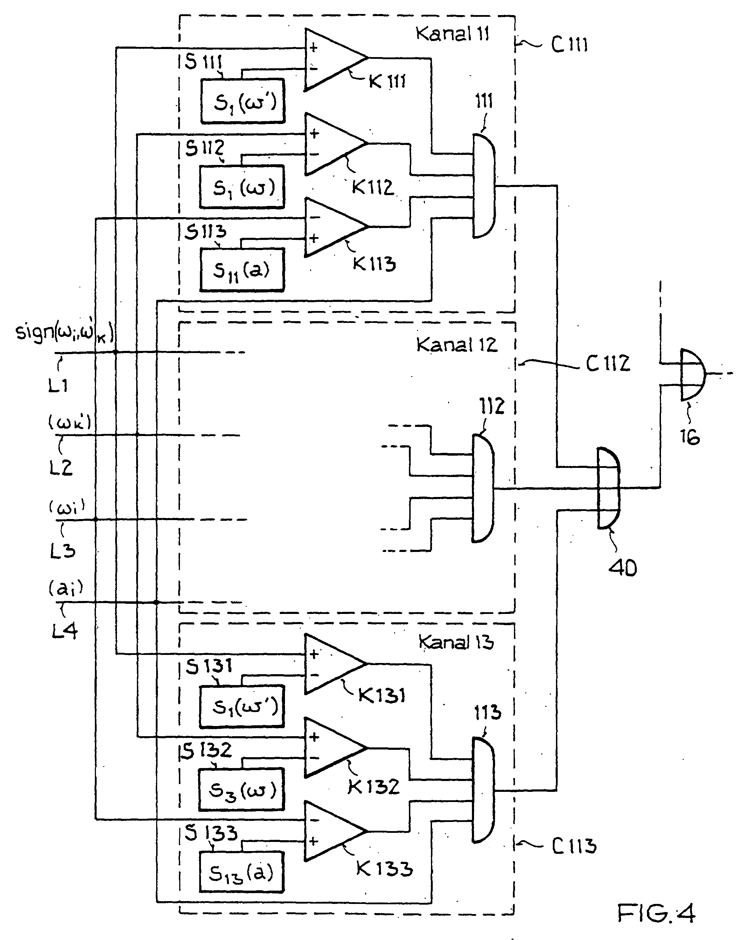

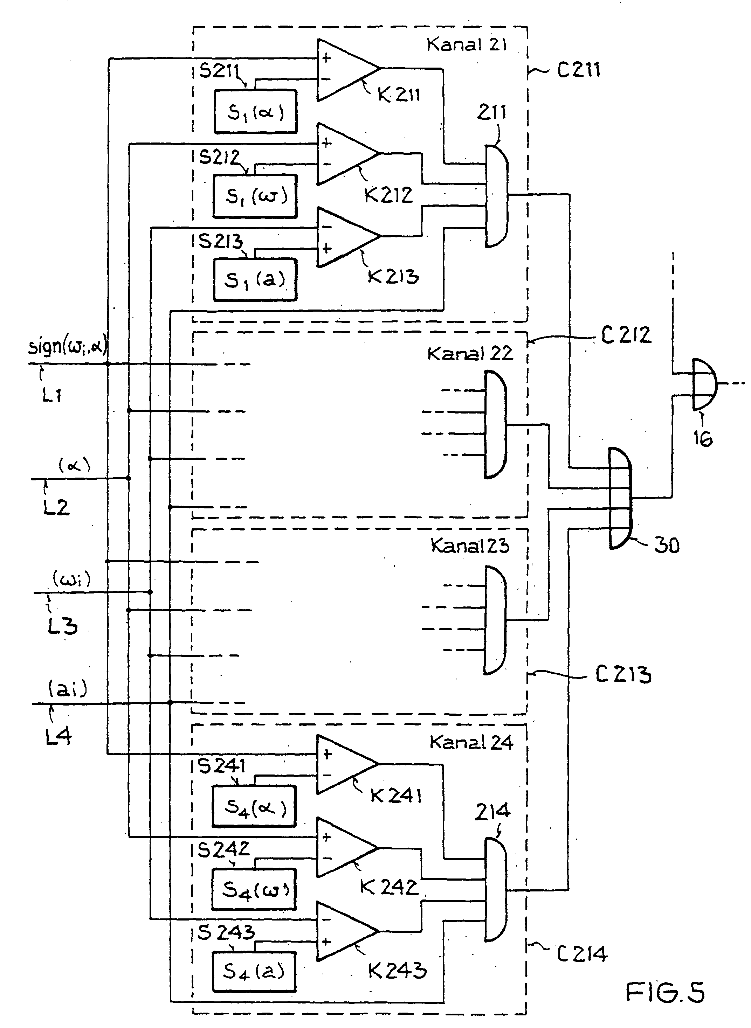

Die Figur 1 zeigt als Ausführungsbeispiel des erfindungsgemäßen Verfahrens eine Anordnung, bestehend aus einem Drehraten- oder Gyrosensor 1, der ein zur Winkelgeschwindigkeit $\omega_x$ (Drehrate) um die Längsachse (X-Achse) eines Fahrzeuges proportionales Signal erzeugt, das zunächst einem A/D-Wandler 3 zwecks Digitalisierung zugeführt wird, die mit einer Abtastfrequenz von 1 kHz durchgeführt wird, so daß in äqidistanten Datenerfassungszeitpunkten $(t_i)$ die Drehratendaten $(\omega_i)$ vorliegen.

Da diese Drehratendaten $(\omega_i)$ nachfolgend - wie weiter unten erläutert wird - einer Integration unterzogen werden, die zur näherungsweise Berechnung des Neigungswinkels $\alpha$ führt, muß aufgrund des Offsets und der Offset-Drift, dessen Bereich bis zu 50 °/s nach beiden Seiten vom tatsächlichen Nullpunkt abweichen kann, vor der Integration eine Offset-Kompensation durchgeführt werden, da ansonsten der Wert der Integration fehlerhaft wird. Diese Kompensation wird mittels eines Tiefpassfilters TP1 1. Ordnung mit einer Grenzfrequenz von 10mHz durchgeführt.

Mit einem Komparator 4, dem sowohl das tiefpassgefilterte als auch die digitalisierte Drehratendaten $(\omega_i)$ zugeführt werden, erfolgt die Subtraktion des gefilterten Signals von den werten der Drehratendaten $(\omega_i)$, womit nicht nur die Fehler des Offsets, sondern auch Fehler der Offset-Drift behoben werden.

Um den im Fahrbetrieb durch das Feder-Dämpfer-System und sonstigen Einflußgrößen verursachten Rauschanteil des Signals zu glätten, wird ein weiteres Tiefpassfilter TP3 1. Ordnung dem Komparator nachgeschaltet, das jedoch gegenüber dem Tiefpassfilter TP1 eine wesentliche höhere Grenzfrequenz, vorzugsweise 11Hz aufweist.

Erst nach dieser Glättung wird eine Auswertung hinsichtlich des Vorliegens einer zu einem Überschlag führenden kritischen Fahrzeuglage ausgeführt.

Zusätzlich zur Verarbeitung des von dem Drehratensensor 1 erzeugten Drehratensignals, wird auch ein von einem Beschleunigungssensor 2 erzeugtes Beschleunigungssignal in Richtung des Fahrzeugbodens, also in z-Richtung ausgewertet. Hierzu wird das Beschleunigungssignal ebenfalls mittels eines A/D-Wandlers 5 mit der gleichen Abtastfrequenz entsprechend derjenigen des A/D-Wandlers 3 von 1 kHz digitalisiert und als Beschleunigungsdaten $(a_i)$ genauso wie die Drehratendaten $(\omega_i)$ einer Glättung unterzogen. Hierzu dient ein Tiefpassfilter TP2 1. Ordnung mit einer Grenzfrequenz von 4 Hz.

Die Auswertung der Drehratendaten $(\omega_i)$ und der Beschleunigungsdaten $(a_i)$ erfolgt nun über zwei Kanäle, nämlich Kanal 1 und Kanal 2. Die Auswertung über Kanal 1 erfolgt dabei auf der Grundlage einer durch eine Art von Differentiation der Drehratendaten $(\omega_i)$ gebildeten Größe, während die Auswertung über .Kanal 2 auf der durch Integration der Drehratendaten $(\omega_i)$ gebildeten Größe $\int \varphi dt_i$ beruht.

Gemäß Figur 1 wird in Kanal 1 mittels einer Differentiatoreinheit 10 eine im folgenden erläuterte Differentiation durchgeführt, die von der mathematischen Differentialrechnung abweicht. Auf der Grundlage der für die Digitalisierung verwendeten Abtastfrequenz von 1kHz werden innerhalb eines Zeitintervalles von 3 ms, also zu Datenerfassungszeitpunkten $t_{i-3}$, $t_{i-2}$, $t_{i-1}$ und $t_i$ Differenzenquotienten $\Delta\omega_j$ mit j = 1,2,3 gebildet:

$$\Delta\omega_i = (\omega_i - \omega_{i-1}) / (t_i - t_{i-1})$$

$$\Delta\omega_{i-1} = (\omega_{i-1} - \omega_{i-2}) / (t_{i-1} - t_{i-2})$$

$$\Delta\omega_{i-2} = (\omega_{i-2} - \omega_{i-3}) / (t_{i-2} - t_{i-3})$$

Anschließend werden diese Differenzenquotienten $\Delta\omega_i$ mit i = 1,2,3 zur Bildung eines Differentialwertes $\omega_i'$ aufsummiert:

$$\omega_i' = \Delta\omega_i + \Delta\omega_{i+1} + \Delta\omega_{i+3}$$

Sich wiederholend wird im nächsten Datenerfassungszeitpunkt $t_{i+1}$ der nächste Differentialwert $\omega_{i+1}'$ berechnet, so daß man eine Folge von Differentialwerten $(\omega_i')$ erhält, das im folgenden Differential $(\omega_i')$ bezeichnet wird.

Somit wird mit jedem neuen Datenerfassungszeitpunkt $t_{i+1}$, $t_{i+2}$, $t_{i+3}$ ..... ein neues Zeitintervall $t_{i+1} - t_i$, $t_{i+2} - t_{i+1}$, $t_{i+3} - t_{i+2}$, ..... berechnet, das zusammen mit den jeweils zwei vorangehenden Zeitintervallen zur Berechnung des Differentials dienen, wobei lediglich der zu dem neu gebildeten Zeitintervall gehörende Differenzenquotient gebildet werden muß, um anschließend mit den schon vorliegenden Differenzenquotienten der vorangehenden Zeitintervalle aufsummiert zu werden. Infolgedessen überlappen sich bei zwei direkt aufeinanderfolgenden Differentialwerten $\omega_i'$ und $\omega_{i+1}'$ zwei Zeitintervalle, womit sich die gleiche Taktrate ergibt, die auch für die Digitalisierung verwendet wird.

Die werte dieses Differentials $(\omega_i')$ werden sowohl einer Vorzeichenbewertungseinheit 9 als auch einer Bewertungseinheit 11 zugeführt, die außerdem zwecks Zuführung der Drehratendaten $(\omega_i)$ dem Tiefpassfilter TP2 nachgeschaltet sind.

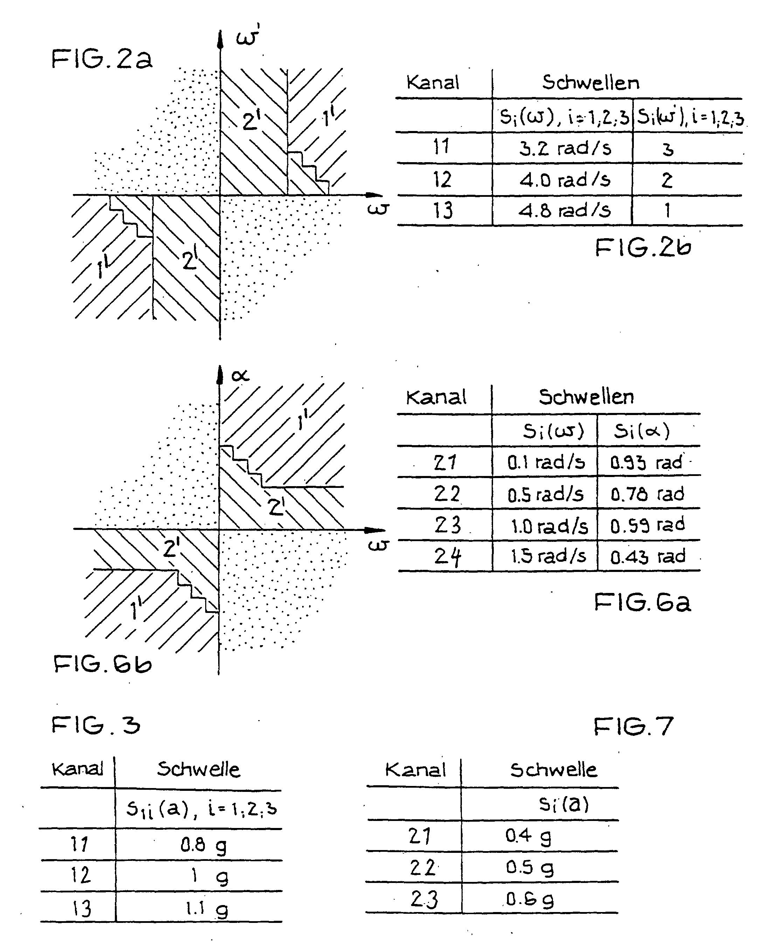

In der Bewertungseinheit 11 wird anhand einer Bewertungsfunktion $f_1(\omega_i')$ jeder Wert $\omega_i'$ des Differentials $(\omega_i')$ bewertet. Diese Bewertungsfunktion $f_1$ koppelt jeden Wert $\omega_i$ der Drehratendaten $(\omega_i)$ mit dem jeweils

zugehörigen Differentialwert $\omega_i'$ entsprechend der in Figur 2a dargestellten Treppenfunktion, die im 1. und 3. Quadranten 3-stufig ausgebildet ist. Diese drei Stufen stellen jeweils eine $\omega_l$ - $\omega_l'$ - Schwellwertkombination dar, so daß bei einer Überschreitung einer dieser Stufen die Bewertungseinheit 11 ein Auslösesignal an das AND-Gatter 15 sendet. Dabei stellen die mit den Bezugszeichen 2' bezeichneten Gebiete in dem Diagramm die No-Fire-Gebiete dar, in denen die entsprechenden Werte zu keiner Auslösung führen, dagegen werden die mit dem Bezugszeichen 1'bezeichneten Gebiete als Fire-Gebiete dargestellt, die eine kritische, möglicherweise zu einem Überschlag führende Fahrzeugzustand anzeigen.

Mit diesen drei Schwellwertkombinationen, deren Werte in der Tabelle gemäß Figur 2b dargestellt sind, wird der Kanal 1, der in diesem Sinne ein Hauptkanal darstellt, in drei voneinander unabhängige Kanäle 11, 12 und 13 aufgespalten. Entsprechend den Anforderungen der Automobilhersteller kann der Hauptkanal 1 auch in eine geringere oder höhere Anzahl von Kanälen aufweisen.

Falls die entsprechenden Schwellwerte von den Größen $\omega_i$ und $\omega_i'$ auf einem der Kanäle 11, 12 oder 13 überschritten werden, gibt die Bewertungseinheit 11 an das AND-Gatter 15 ein Auslösesignal ab, das jedoch erst dann über ein ODER-Gatter 16 einer Auslöseeinheit 17 einer Sicherheitseinrichtung (in der Figur nicht dargestellt), wie beispielsweise eines Überrollbügels, Gurtstraffers oder Airbags zugeführt wird, wenn gleichzeitig die vorzeichenbewertungseinheit 9 als auch ein Komparator 14 ein entsprechendes Signal dem AND-Gatter 15 zuführen.

Es ist auch möglich für die Werte des Differentials $(\omega_k')$ eine niedrigere Taktrate zu wählen, indem ein Differentialwert $\omega_k'$ nur für jeden zweiten Drehratenwert $\omega_l$, $\omega_{l+2}$, $\omega_{l+4}$ berechnet wird. Damit überlappt sich nur ein Zeitintervall bei zwei aufeinanderfolgenden Differentialwerten $\omega_k'$ und $\omega_{k+1}'$.

Falls nur für jeden dritten Drehratenwert $\omega_i$, $\omega_{i+3}$, $\omega_{l+6}$ ein Differentialwert $\omega_k'$ berechnet wird, sind die zugehörigen Zeitintervalle disjunkt. Das hat zur Folge, daß in der Bewertungseinheit 11 nur jeder zweite bzw. jeder dritte wert $\omega_i$ der Drehratendaten $(\omega_i)$ mit dem zugehörigen Wert des Differentials $(\omega_k')$ bewertet wird.

Mit der Vorzeichenbewertungseinheit 9 wird ein sogenanntes Signum-Kriterium geprüft, wonach ein Signal erzeugt wird, sobald ein Wert $\omega_l$ der Drehratendaten $(\omega_i)$ und der zugehörige wert $\omega_i'$ des Differentials $(\omega_i')$ das gleiche Vorzeichen aufweisen, andernfalls wird bei einem Überschlag die Auslösung solange verzögert, bis gleiche Vorzeichen vorliegen. Liegen unterschiedliche Vorzeichen vor, ist damit zu rechnen daß die Fahrlage des Fahrzeuges sich stabilisieren wird.

Mit dem Komparator 14 wird die dynamische Stabilität des Fahrzeuges geprüft, indem die Werte der Beschleunigungsdaten $(a_i)$ mit einem von einer Schwellwerterzeugungsschaltung S1 erzeugten Schwellwert $S_1(a)$ als Stabilitätsschwelle verglichen werden, wobei dieser Schwellwert entsprechend den Kanälen 11, 12, und 13 drei Werte $S_{11}(a)$, $S_{12}(a)$ und $S_{13}(a)$ annimmt. Die Grundlage hierfür ist die in Richtung des Fahzeugbodens gemessene Beschleunigung, wobei der jeweilige Wert $a_i$ der Beschleunigung auf eine Schwellwertunterschreitung geprüft wird. Falls die entsprechende Schwelle unterschritten wird, liegt ein entsprechendes Signal an dem AND-Gatter 15 an.

Die entsprechenden Schwellwerte $S_{1i}(a)$ mit i=1, 2 und 3 für die Kanäle 11,12 und 13 sind in der Tabelle der Figur 3 aufgeführt, die relativ hohe werte darstellen. Eine Fehlauslösung auf diesem Kanal 1 kann durch die hohen Drehgeschwindigkeitsschwellen gemäß Figur 3a verhindert werden. Die hohen Beschleunigungsschwellen verhindern folglich eine Auslösung nur dann, wenn das Beschleunigungssignal Werte annimmt, die auf eine außerordentlich stabile Fahrzeuglage hinweisen.

Auf Kanal 1 werden also drei Kriterien überprüft, so daß eine Auslösung der Auslöseeinheit 17 erst dann erfolgt, wenn alle vorgegebenen Bedingungen gleichzeitig erfüllt sind. Die entsprechende Entscheidungsfindung ist dabei auf drei verschiedenen, voneinander unabhängigen Ebenen möglich, indem eine entsprechende Anzahl von Schwellwertkombinationen - wie oben anhand der Figuren 2b und 3 erläutert wurde - vorgegeben wird, so daß sich daraus die genannten Kanäle 11, 12 und 13 ergeben. Die Aufspaltung des Kanals 1 in die Kanäle 11, 12 und 13 wird detaillierter in Figur 4 dargestellt und erläutert.

Gemäß dieser Figur 4 werden über Leitungen L1, L22, L3 und L4 die Größe sign $(\omega_i, \omega_i')$, die die Übereinstimmung der Vorzeichen der beiden Größen $\omega_l$ und $\omega_l'$ anzeigt, das Differential $(\omega_i')$, die Drehratendaten $(\omega_i)$ und die Beschleunigungsdaten $(a_i)$ drei Auswerteeinheiten C111, C112 und C113 zugeführt, die die genannten Kanäle 11 bis 13 darstellen. Diese Auswerteeinheiten sind identisch mit jeweils drei Komparatoren K111, K112, K113 bis K131, K132, K133 mit zugehörigen Schwellwertschaltungen S111, S112, S113 bis S131, S132, S133 aufgebaut.

Den erstgenannten Komparatoren K111 bis K131 werden über deren nicht-invertierenden Eingängen die werte des Differentials $(\omega_i')$ und deren invertierenden Eingängen jeweils ein von den Schwellwertschaltungen S111 bis S131 erzeugten Schwellwert $S_i(\omega')$, für i = 1, 2 und 3 zugeführt.

Den zweitgenannten Komparatoren K112 bis K132 werden über deren nicht-invertierenden Eingängen die Werte der Drehratendaten $(\omega_i)$ und deren invertierenden Eingängen jeweils ein von den Schwellwertschaltungen S112 bis S132 erzeugten Schwellwert $S_i(\omega)$, für i = 1, 2 und 3 zugeführt.

Die für $\omega_i$ und $\omega_i'$ vorgesehenen Schwellwerte $S_i(\omega)$ und $S_i(\omega')$ für i = 1,....,3 ergeben sich aus der schon erläuterten Figur 2b mit zugehörigem Kennlinienverlauf in Figur 2a.

Den drittgenannten Komparatoren K113 bis K133 werden über deren invertierenden Eingängen die Werte der Beschleunigungsdaten ($a_i$) und deren nicht-invertierenden Eingängen jeweils ein von den Schwellwertschaltungen S113 bis S133 erzeugten Schwellwert $S_i(a)$, für i=1, ...3 zugeführt. Die jedem Kanal 11 bis 13 zugeordneten Schwellwerte $S_{11}(a)$, $S_{12}(a)$ und $S_{13}(a)$ ergeben sich aus der schon erläuterten Figur 3.

Die Ausgänge der Komparatoren eines Kanals sind auf jeweils ein AND-Gatter 111 bis 113 geführt. Auf jedes dieser AND-Gatter wird auch das Ergebnis der Vorzeichenprüfung über die Leitung L1 geführt.

Somit kann auf jedem Kanal 11 bis 13 eine eigenständige Auslösung erfolgen, wobei das entsprechende Signal über eines der AND-Gatter 111 bis 113 und ein ODER-Gatter 40 dem ODER-Gatter 16 aus Figur 1 zugeführt wird.

Im folgenden soll nun die Arbeitsweise des Kanals 2 erläutert werden. Gemäß Figur 1 werden dazu mittels einer Integratoreinheit 7 die Werte der Drehratendaten ($\omega_i$) zur Bildung eines Integrals $\int \varphi dt_l$ aufsummiert. Um eine gegen unendlich strebende Integral-Drift zu verhindern, wird eine Integralrückführung mittels einer Rückführfunktion $R(\int \varphi dt_i)$ durchgeführt, die derart definiert ist, daß bei einem über eine längere Zeitdauer konstant vorliegenden Integrationswert dieser in Zeitabschnitten von je 100 ms um 15% zurückgeführt wird. Der durch Summation der Drehratendaten ($\omega_l$) gebildete und mittels der Rückführfunktion $R(\int \varphi dt_i)$ modifizierte Integrationswert entspricht näherungsweise dem Neigungswinkel $\alpha$ des Fahrzeuges.

Dieser Neigungswinkel $\alpha$ wird sowohl einer Vorzeichenbewertungseinheit 6 als auch einer Bewertungseinheit 8 zugeführt, die außerdem zwecks Zuführung der Drehratendaten ($\omega_i$) dem Tiefpassfilter TP3 nachgeschaltet sind.

In der Bewertungseinheit 8 wird anhand einer Bewertungsfunktion $f_2$ für jeden Wert $\omega_i$ der Drehratendaten ($\omega_i$) eine Bewertung des Wertes des Neigungswinkel $\alpha$ durchgeführt. Führt diese Bewertung dazu, daß ein Überschlag des Fahrzeuges zu erwarten ist, gibt diese Bewertungseinheit 8 an ein AND-Gatter 12 ein Auslösesignal ab. Dieses Auslösesignal wird jedoch erst dann über das ODER-Gatter 16 der Auslöseeinheit 17 der Sicherheitseinrichtung 17 weitergeleitet, wenn gleichzeitig die Vorzeichenbewertungseinheit 6 als auch ein Komparator 13 ein entsprechendes Signal dem AND-Gatter 12 zuführen.

Mit der Vorzeichenbewertungseinheit 6 wird ein sogenanntes Signum-Kriterium geprüft, wonach ein Signal erzeugt Wird, sobald ein Wert der Drehratendaten ($\omega_l$) und der Neigungswinkel $\alpha$ des Fahrzeuges das gleiche Vorzeichen aufweisen, andernfalls wird bei einem Überschlag die Auslösung solange verzögert, bis gleiche Vorzeichen vorliegen.

Mit dem Komparator 13 wird die dynamische Stabilität des Fahrzeuges geprüft, indem die werte der Beschleunigungsdaten ($a_i$) mit einem von einer Schwellwerterzeugungsschaltung S2 erzeugten Schwellwert $S_2(a_z)$ verglichen wird. Die Grundlage hierfür ist die in Richtung des Fahzeugbodens gemessene Beschleunigung, wobei der jeweilige Wert $a_i$ der Beschleunigung auf eine Schwellwertüberschreitung geprüft wird. Falls die entsprechende Schwelle überschritten wird, liegt ein entsprechendes Signal am AND-Gatter 12 an.

Auf Kanal 2 werden also drei Kriterien überprüft, so daß eine Auslösung der Auslöseeinheit 17 erst erfolgt, wenn alle vorgegebenen Bedingungen gleichzeitig erfüllt sind. Die entsprechende Entscheidungsfindung ist dabei auf vier verschiedenen, voneinander unabhängigen Ebenen möglich, indem eine entsprechende Anzahl von Schwellwertkombinationen vorgegeben wird, so daß sich Kanal 2 aufteilen läßt in die Kanäle 21 bis 24, wie im folgenden erläutert wird. Auch hier ist in gleicher Weise wie im Zusammenhang mit der Beschreibung des Kanals 1 erwähnt wurde, jede andere Anzahl von Kanalaufteilungen möglich.

In Figur 5 werden über Leitungen L1 bis L4 die Größe sign ($\omega_i$, $\alpha$), die die Übereinstimmung der Vorzeichen der beiden Größen $\omega_l$ und $\alpha$ anzeigt, der Neigungswinkel $\alpha$, die Drehratendaten ($\omega_i$) und die Beschleunigungsdaten ($a_i$) vier Auswerteeinheiten C211 bis C214 zugeführt, die die genannten Kanäle 21 bis 24 darstellen. Diese Auswerteeinheiten sind identisch mit jeweils drei Komparatoren K211, K212, K213 für Kanal 21 bis Komparatoren K241, K242, K243 für Kanal 24 mit zugehörigen Schwellwerterzeugungsschaltungen S211, S212, S213 bis S241, S242, S243 aufgebaut.

Den erstgenannten Komparatoren K211 bis K241 werden über deren nicht-invertierenden Eingängen der Neigungswinkel $\alpha$ und deren invertierenden Eingängen jeweils ein von den Schwellwerterzeugungsschaltungen S211 bis S241 erzeugten Schwellwert $S_i(\alpha)$, für i=1, ...4 zugeführt.

Den zweitgenannten Komparatoren K212 bis K242 werden über deren nicht-invertierenden Eingängen die Werte der Drehratendaten ($\omega_i$) und deren invertierenden Eingängen jeweils ein von den Schwellwerterzeugungsschaltungen S212 bis S242 erzeugten Schwellwert $S_i(\omega)$, für l=1, ...4 zugeführt.

Die für $\alpha$ und $\omega_i$ vorgesehenen Schwellwerte $S_i(\alpha)$ und $S_i(\omega)$ für i=1,....,4 ergeben sich aus Figur 6a mit zugehörigem Kennlinienverlauf in Figur 6b. Die Kennlinie zeigt eine vierstufige Treppenfunktion, wobei die vier Stufen die $\omega$-$\alpha$- Schwellwertkombinationen für die Kanäle 21 bis 24 darstellen. Die Werte für den Neigungswinkel $\alpha$ und die Werte der Drehratendaten ($\omega_i$) werden auf ein Überschreiten dieses vierstufigen Kennlinienbereiches im ersten und dritten Quadranten geprüft, die als Fire-Gebiete mit dem Bezugszeichen 1' in dem Diagramm bezeichnet sind.

Den drittgenannten Komparatoren K213 bis K243 werden über deren invertierenden Eingängen die Werte der Beschleunigungsdaten ($a_i$) und über deren nicht-invertierenden Eingängen jeweils ein von den Schwellwerterzeugungsschaltungen S213 bis S243 erzeugten Schwellwert $S_i(a)$, für i = 1, ...4 zugeführt. Die den Kanälen 21 bis 24 zugeordneten Schwellwerte ergeben sich aus Figur 7. Durch die so gesetzten Schwellwerte, die einen Spielraum für die Toleranzen im Offsetbereich des Beschleunigungsaufnehmers offenlassen, wird beispielsweise.eine Auslösung in einer Steilkurve verhindert.

Die Ausgänge der Komparatoren eines Kanals sind auf jeweils ein AND-Gatter 211 bis 214 geführt. Auf jedes dieser AND-Gatter wird auch das Ergebnis der Vorzeichenprüfung über die Leitung L1 geführt.

Somit kann auf jedem Kanal 21 bis 24 eine eigenständige Auslösung erfolgen, wobei das entsprechende Signal über eines der AND-Gatter 211 bis 214 und ein ODER-Gatter 30 dem ODER-Gatter 16 zugeführt wird.

Mit dem Ausführungsbeispiel gemäß den Figuren 4 und 5 steht damit ein Auslöseverfahren zur Verfügung, das sieben voneinander unabhängige Kanäle aufweist, mittels derer eine Auslöseentscheidung getroffen werden kann. Dabei ist es natürlich möglich auch weniger oder mehr Kanäle zu realisieren, indem die in dem beiden Hauptkanälen 1 und 2 vorgesehenen Stufen entsprechend den Forderungen seitens der Kraftfahrzeughersteller variiert werden.

**Patentansprüche**

1. Verfahren zur Auslösung wenigstens einer Sicherheitseinrichtung in einem Kraftfahrzeug im Falle eines Überschlages, bei dem

a) das von einem die Drehgeschwindigkeit der Wankbewegung sensierenden Drehratensensor (1) abgegebene Sensorsignal zur Erzeugung von Drehratendaten $((\omega_i))$ in aufeinanderfolgenden, vorzugsweise äquidistanten Datenerfassungszeitpunkten $((t_i))$ abgetastet wird,

b) mit wenigstens drei aufeinanderfolgenden Datenerfassungszeitpunkten $(t_{i-3}, t_{i-2}, t_{i-1}, t_i)$ wenigstens zwei disjunkte Zeitintervalle $(t_i - t_{i-1}, t_{i-1} - t_{i-2}, t_{i-2} - t_{i-3})$ erzeugt werden,

c) aus den zu den drei aufeinanderfolgenden Datenerfassungszeitpunkten $(t_{i-3}, t_{i-2}, t_{i-1}, t_i)$ gehörenden Drehratenwerte $(\omega_i, \omega_{i-1}, \omega_{i-2}, \omega_{i-3})$ die Differenzenquotienten $(\Delta\omega_i, i = 1,2,3)$ gebildet werden,

d) die Differenzenquotienten $(\Delta\omega_i, i=1,2,3)$ zur Bildung eines einem der genannten Drehratenwerte $(\omega_i, \omega_{i-1}, \omega_{i-2}, \omega_{i-3})$ zuzuordnenden Differentialwertes $(\omega_i')$ aufsummiert werden,

e) in Abhängigkeit dieses Drehratendatenwertes $(\omega_i, \omega_{i-1}, \omega_{i-2}, \omega_{i-3})$ mittels wenigstens einer Bewertungsfunktion $(f_1, sign)$ der zugeordnete Differentialwert $(\omega_i')$ bewertet wird, und

f) in Abhängigkeit der Bewertung die Sicherheitseinrichtung ausgelöst wird.

2. Verfahren nach Anspruch 1, bei dem

g) im Datenerfassungszeitpunkt $(t_i)$ die Verfahrensschritte b) bis f) durchgeführt werden, wobei dem erfaßten Wert $(\omega_i)$ der Drehrate der gemäß Verfahrensschritt d) berechnete Differentialwert $(\omega_i')$ zugeordnet wird, und

h) in darauffolgenden Datenerfassungszeitpunkten $(t_{i+1}, t_{i+2}, t_{i+3}, ....)$ sukzessive Verfahrensschritt g) wiederholt wird.

3. Verfahren nach Anspruch 1 oder 2, bei dem in Abhängigkeit eines Drehratenwertes $(\omega_i)$ der Wert der Bewertungsfunktion $f_1(\omega_i)$ berechnet wird, mit dem zugehörigen Differentialwert $(\omega_i')$ verglichen wird, und die Sicherheitseinrichtung ausgelöst wird, falls der wert der Bewertungsfunktion $f_1(\omega_i)$ von dem Differentialwert $(\omega_i')$ überschritten wird.

4. Verfahren nach Anspruch 1, 2 oder 3, bei dem die Bewertungsfunktion $(f_1)$ eine Treppenfunktion darstellt.

5. Verfahren nach Anspruch 4, bei dem die Treppenfunktion $(f_1)$ monoton fallend und eine begrenzte Anzahl von Stufen aufweist.

6. Verfahren nach einem der vorangehenden Ansprüche, bei dem als weitere Bewertungsfunktion (sign) das Vorzeichen der Werte der Drehratendaten $((\omega_i))$ und das Vorzeichen des zugehörigen Differentialwertes des Differentials $((\omega_i'))$ verglichen werden, und eine Auslösung der Sicherheitseinrichtung verhindert wird, wenn die Vorzeichen unterschiedlich sind.

7. Verfahren nach einem der vorangehenden Ansprüche, bei dem

a) zur Berechnung des Integrals $(\int \varphi dt_i)$ über den werten der Drehratendaten $((\omega_i))$ diese aufsummiert werden,

b) für jeden Wert der Drehratendaten $((\omega_i))$ mittels wenigstens einer Bewertungsfunktion $(f_2)$ der Wert des Integrals $(\int \varphi dt_i)$ bewertet wird, und

c) in Abhängigkeit der Bewertung ein Auslösesignal erzeugt wird.

8. Verfahren nach Anspruch 7, bei dem in Abhängigkeit eines Drehratenwertes $(\omega_l)$ der wert der Bewer-

tungsfunktion ($f_2(\omega_i)$) mit dem Wert des Integrals ($\int \varphi\,dt_i$) verglichen wird, und das Auslösesignal erzeugt wird, falls der Wert der Bewertungsfunktion ($f_2(\omega_l)$) von dem Wert des Integrals ($\int \varphi\,dt_i$) überschritten wird.

9. Verfahren nach Anspruch 7 oder 8, bei dem zur Rückführung des Integrals ($\int \varphi\,dt_i$) eine Rückführfunktion ($R(\int \varphi\,dt_i)$) berechnet wird.

10. Verfahren nach Anspruch 9, bei dem die Rückführfunktion ($R(\int \varphi\,dt_i)$) in Abhängigkeit der zeitlichen Konstanz des Wertes des Integrals ($\int \varphi\,dt_i$) dieses zurückführt.

11. Verfahren nach Anspruch 10, bei dem die Rückführung des Integrals ($\int \varphi\,dt_l$) stufenweise erfolgt.

12. Verfahren nach Anspruch 11, bei dem die Rückführung des Integrals ($\int \varphi\,dt_i$) in Zeitabschnitten ($\Delta t$) um x % zurückgeführt wird, wobei $\Delta t$ in dem Bereich 1 bis 200 ms und x in dem Bereich 10 bis 20 liegt.

13. Verfahren nach einem der Ansprüche 7 bis 12, bei dem die Bewertungsfunktion ($f_2$) eine Treppenfunktion darstellt.

14. Verfahren nach Anspruch 13, bei dem die Bewertungsfunktion ($f_2$) monoton fallend. und eine begrenzte Anzahl von Stufen aufweist.

15. Verfahren nach einem der Ansprüche 7 bis 14, bei dem als weitere Bewertungsfunktion (sign) das Vorzeichen der Werte der Drehratendaten (($\omega_i$)) und das Vorzeichen des Integrals ($\int \varphi\,dt_i$) verglichen werden, und eine Auslösung der Sicherheitseinrichtung verhindert wird, wenn die Vorzeichen unterschiedlich sind.

16. Verfahren nach einem der vorangehenden Ansprüche, bei dem das von einem die Vertikalbeschleunigung des Kraftfahrzeuges sensierenden Beschleunigungssensor abgegebene Sensorsignal zur Erzeugung von Beschleunigungsdaten (($a_i$)) in den Datenerfassungszeitpunkten (($t_i$)) abgetastet wird.

17. Verfahren nach Anspruch 16, bei dem die Werte der Beschleunigungsdaten (($a_i$)) mit wenigstens einer Stabilitätsschwelle ($S(a_z)$) verglichen werden und eine Auslösung der Sicherheitseinrichtung verhindert wird, wenn diese Stabilitätsschwelle ($S(a_z)$) von den Werten der Beschleunigungsdaten (($a_i$)) erreicht wird.

**Claims**

1. A method of triggering at least one safety device in a motor vehicle in the event of overturning, wherein

   a) the sensor signal emitted by a rate-of-turn sensor (1) that is sensing the rotational speed of the rolling motion is sampled at successive, preferably equidistant data acquisition time points (($t_i$)) for the purposes of producing the items of rate-of-turn data (($\omega_i$)),
   b) at least two disjunctive time intervals ($t_i - t_{i-1}$, $t_{i-1} - t_{i-2}$, $t_{i-2} - t_{i-3}$) are produced using at least three mutually successive data acquisition time points ($t_{i-3}$, $t_{i-2}$, $t_{i-1}$, $t_i$),
   c) the difference quotients ($\Delta\omega_i$, i = 1, 2, 3) are formed from the rate-of-turn values ($\omega_i$, $\omega_{i-1}$, $\omega_{i-2}$, $\omega_{i-3}$) appertaining to the three mutually successive data acquisition time points ($t_{i-3}$, $t_{i-2}$, $t_{i-1}$, $t_i$),
   d) the difference quotients ($\Delta\omega_i$, i = 1, 2, 3) are summed for the purposes of forming a differential value ($\omega_i'$) which is to be associated with one of the aforesaid rate-of-turn values ($\omega_i$, $\omega_{i-1}$, $\omega_{i-2}$, $\omega_{i-3}$),
   e) the associated differential value ($\omega_i'$) is evaluated in dependence on this rate-of-turn data value ($\omega_i$, $\omega_{i-1}$, $\omega_{i-2}$, $\omega_{i-3}$) by means of at least one evaluating function ($f_1$, sign), and
   f) the safety device is triggered in dependence on the evaluation.

2. A method in accordance with Claim 1, wherein

   g) the method steps b) to f) are carried out at the data acquisition time point ($t_i$), whereby the differential value ($\omega_i'$) computed in accordance with the method step d) is associated with the detected value ($\omega_i$) of the rate-of-turn, and
   h) method step g) is repeated successively at the following data acquisition time points ($t_{i+1}$, $t_{i+2}$, $t_{i+3}$, ...).

3. A method in accordance with Claim 1 or 2, wherein the value of the evaluating function $f_1(\omega_i)$ is computed in dependence on a rate-of-turn value ($\omega_i$), is compared with the appertaining differential value ($\omega_i'$), and the safety device is triggered in the event that the value of the evaluating function $f_1(\omega_i)$ is exceeded by the differential value ($\omega_i'$).

4. A method in accordance with Claim 1, 2 or 3, wherein the evaluating function ($f_1$) represents a step function.

5. A method in accordance with Claim 4, wherein the step function ($f_1$) falls monotonically and has a limited number of steps.

6. A method in accordance with any of the preceding Claims, wherein, as a further evaluating function (sign), the prefix sign of the values of the items of rate-of-turn data $((\omega_i))$ and the prefix sign of the appertaining differential value of the differential $((\omega_i'))$ are compared, and triggering of the safety device is prevented if the prefix signs are different.

7. A method in accordance with any of the preceding Claims, wherein

   a) for the purposes of computing the integral $(\int \varphi dt_i)$ with respect to the values of the items of rate-of-turn data $((\omega_i))$, these are summed,
   b) the value of the integral $(\int \varphi dt_i)$ is evaluated for each value of the items of rate-of-turn data $((\omega_i))$ by means of at least one evaluating function $(f_2)$, and
   c) a triggering signal is produced in dependence on the evaluation.

8. A method in accordance with Claim 7, wherein the value of the evaluating function $(f_2(\omega_i))$ is compared with the value of the integral $(\int \varphi dt_i)$ in dependence on a rate-of-turn value $(\omega_i)$, and the triggering signal is produced in the event that the value of the evaluating function $(f_2(\omega_i))$ is exceeded by the value of the integral $(\int \varphi dt_i)$.

9. A method in accordance with Claim 7 or 8, wherein a feedback function $(R(\int \varphi dt_i))$ is computed for the purposes of feedback of the integral $(\int \varphi dt_i)$.

10. A method in accordance with Claim 9, wherein the feedback function $(R(\int \varphi dt_i))$ feeds back the integral $(\int \varphi dt_i)$ in dependence on the temporal constancy of the value thereof.

11. A method in accordance with Claim 10, wherein the reduction of the integral $(\int \varphi dt_i)$ takes place in step-like manner.

12. A method in accordance with Claim 11, wherein the feedback of the integral $(\int \varphi dt_i)$ is reduced by x % in time periods $(\Delta t)$, wherein $\Delta t$ lies in the range 1 to 200 ms and x in the range 10 to 20.

13. A method in accordance with any of the Claims 7 to 12, wherein the evaluating function $(f_2)$ represents a step function.

14. A method in accordance with Claim 13, wherein the evaluating function $(f_2)$ falls monotonically and has a limited number of steps.

15. A method in accordance with any of the Claims 7 to 14, wherein, as a further evaluating function (sign), the prefix sign of the values of the items of rate-of-

turn data $((\omega_i))$ and the prefix sign of the integral $(\int \omega_i dt_i)$ are compared, and triggering of the safety device is prevented if the prefix signs are different.

16. A method in accordance with any of the preceding Claims, wherein the sensor signal emitted by the acceleration sensor that is sensing the vertical acceleration of the motor vehicle is sampled for the purposes of producing items of acceleration data $((a_i))$ at the data acquisition time points $((t_i))$.

17. A method in accordance with Claim 16, wherein the values of the items of acceleration data $((a_i))$ are compared with at least one stability threshold $(S(a_z))$ and triggering of the safety device is prevented if this stability threshold $(S(a_z))$ is reached by the values of the items of acceleration data $((a_i))$.

**Revendications**

1. Procédé pour le déclenchement d'un dispositif de sécurité dans un véhicule automobile dans le cas d'un retournement, selon lequel:

   a) le signal de capteur, qui est délivré par un capteur de vitesse de rotation (1) détectant la vitesse de rotation du mouvement de roulis, est échantillonner pour la production de données de vitesse de rotation $((\omega_i))$ à des instants successifs $((t_i))$ de détection de données, qui sont de préférence équidistants,
   b) respectivement deux intervalles de temps disjoints $(t_i - t_{i-1}, t_{i-1} - t_{i-2}, t_{i-2} - t_{i-3})$ sont produits avec au moins trois instants successifs de détection de données $(t_{i-3}, t_{i-2}, t_{i-1}, t_i)$,
   c) les quotients différentiels $(\Delta\omega_i, i = 1, 2, 3)$ sont formés à partir des valeurs de vitesse de rotation $(\omega_i, \omega_{i-1}, \omega_{i-2}, \omega_{i-3})$, qui sont associées à trois instants successifs $(t_{i-3}, t_{i-2}, t_{i-1}, t_i)$ de détection de données,
   d) les quotients différentiels $(\Delta\omega_i, i = 1, 2, 3)$ sont additionnés pour la formation d'une valeur différentielle $(\omega_i')$ qui doit être associée à l'une desdites valeurs de vitesse de rotation $(\omega_i, \omega_{i-1}, \omega_{i-2}, \omega_{i-3})$,
   e) en fonction de cette valeur de données de vitesse de rotation $(\omega_i, \omega_{i-1}, \omega_{i-2}, \omega_{i-3})$, la valeur différentielle associée $(\omega_i')$ est pondérée à l'aide d'au moins une fonction de pondération $(f_1, signe)$, et
   f) le dispositif de sécurité est déclenché en fonction de la pondération.

2. Procédé selon la revendication 1, selon lequel

   g) des étapes opératoires b) à f) sont exécutées à l'instant $(t_i)$ de détection de données, la valeur

différentielle ($\omega_i'$) calculée conformément à l'étape opératoire d) étant associée à la valeur détectée ($\omega_i$) de la vitesse de rotation, et

h) l'étape opératoire g) est répétée successivement à des instants successifs ($t_{i+1}$, $t_{i+2}$, $t_{i+3}$, ...) de détection de données.

3. Procédé selon la revendication 1 ou 2, selon lequel la valeur de la fonction de pondération $f_1(\omega_i)$ est calculée en fonction d'une vitesse de rotation de rotation ($\omega_i$) est comparée à la valeur différentielle associée ($\omega_i'$), et le dispositif de sécurité est déclenché dans le cas où la valeur de la fonction de pondération $f_1(\omega_i)$ est dépassée par la valeur différentielle ($\omega_i'$).

4. Procédé selon la revendication 1, 2 ou 3, selon lequel la fonction de pondération ($f_1$) représente une fonction escalier.

5. Procédé selon la revendication 4, selon lequel la fonction escalier ($f_1$) est monotone décroissante et possède un nombre limité d'échelons.

6. Procédé selon l'une des revendications précédentes, selon lequel comme autre fonction de pondération (signe), le signe des valeurs des données de vitesse de rotation (($\omega_i$)) et le signe de la valeur différentielle associée de la différentielle (($\omega_i'$)) sont comparés, et un déclenchement du dispositif de sécurité est empêché lorsque les signes sont différents.

7. Procédé selon l'une des revendications précédentes, selon lequel

   a) pour le calcul de l'intégrale ($\int \varphi dt_i$) sur les valeurs des données de vitesse de rotation (($\omega_i$)) ces valeurs sont additionnées,
   b) pour chaque valeur des données de vitesse de rotation (($\omega_i$)) la valeur de l'intégrale ($\int \varphi dt_i$) est pondérée à l'aide d'au moins une fonction de pondération ($f_1$), et
   c) un signal de déclenchement est produit en fonction de la pondération.

8. Procédé selon la revendication 7, selon lequel en fonction de la valeur de vitesse de rotation ($\omega_i$) la valeur de la fonction de pondération ($f_2(\omega_i)$) est comparée à la valeur de l'intégrale ($\int \varphi dt_i$), et le signal de déclenchement est produit dans le cas où la valeur de la fonction de pondération ($f_2(\omega_i)$) est dépassée par la valeur de l'intégrale ($\int \varphi dt_i$).

9. Procédé selon la revendication 7 ou 8, selon lequel pour la réduction de l'intégrale ($\int \varphi dt_i$) on calcule une fonction de réduction (R($\int \varphi dt_i$)).

10. Procédé selon la revendication 9, selon lequel la fonction de réduction (R($\int \varphi dt_i$)) réalise une réduction de l'intégrale ($\int \varphi dt_i$) en fonction de la constance dans le temps de la valeur de cette intégrale.

11. Procédé selon la revendication 10, selon lequel la réduction de l'intégrale ($\int \varphi dt_i$) s'effectue d'une manière échelonnée.

12. Procédé selon la revendication 11, selon lequel la réduction de l'intégrale ($\int \varphi dt_i$) est exécutée sur x % dans des tranches temporelles ($\Delta t$), $\Delta t$ étant située dans la gamme entre 1 et 200 ms et x dans la gamme entre 10 et 20.

13. Procédé selon l'une des revendications 7 à 12, selon lequel la fonction de pondération ($f_2$) représente une fonction en escalier.

14. Procédé selon la revendication 13, selon lequel la fonction de pondération ($f_2$) est monotone décroissante et possède un nombre limité d'échelons.

15. Procédé selon l'une des revendications 7 à 14, selon lequel en tant qu'autre fonction de pondération (signe), le signe des valeurs des données de vitesse de rotation (($\omega_i$)) et le signe de l'intégrale ($\int \varphi dt_i$) sont comparés, et un déclenchement du dispositif de sécurité est empêché lorsque les signes sont différents.

16. Procédé selon l'une des revendications précédentes, selon lequel le signal de capteur délivré par un capteur d'accélération qui détecte l'accélération verticale du véhicule automobile est échantillonné pour la production des données d'accélération (($a_i$)) aux instants de (($t_i$)) de détection de données.

17. Procédé selon la revendication 16, selon lequel les valeurs des données d'accélération (($a_i$)) sont comparées à au moins un seuil de stabilité ($S(a_z)$) et un déclenchement du dispositif de sécurité est empêché lorsque ce seuil de stabilité ($S(a_z)$) est atteint par les valeurs des données d'accélération (($a_i$)).

FIG. 1

FIG.4

FIG.5

13

**FIG.2a**

**FIG.2b**

| Kanal | Schwellen | |
|---|---|---|
| | $S_i(\omega)$, i=1,2,3 | $S_i(\dot\omega)$, i=1,2,3 |
| 11 | 3.2 rad/s | 3 |
| 12 | 4.0 rad/s | 2 |
| 13 | 4.8 rad/s | 1 |

**FIG.6b**

**FIG.6a**

| Kanal | Schwellen | |
|---|---|---|
| | $S_i(\omega)$ | $S_i(\alpha)$ |
| 21 | 0.1 rad/s | 0.93 rad |
| 22 | 0.5 rad/s | 0.78 rad |
| 23 | 1.0 rad/s | 0.59 rad |
| 24 | 1.5 rad/s | 0.43 rad |

**FIG.3**

| Kanal | Schwelle |
|---|---|
| | $S_{1i}(a)$, i=1,2,3 |
| 11 | 0.8 g |
| 12 | 1 g |
| 13 | 1.1 g |

**FIG.7**

| Kanal | Schwelle |
|---|---|
| | $S_i(a)$ |
| 21 | 0.4 g |
| 22 | 0.5 g |
| 23 | 0.6 g |